# EUROPEAN PATENT SPECIFICATION

(11) **EP 4 264 239 B1**
(45) Date of publication and mention of the grant of the patent: **04.06.2025**
(21) Application number: 21802455.2
(22) Date of filing: 24.09.2021
(51) Int. Cl.: G01N 21/78

(54) **GAS SAMPLING SYSTEM**
SYSTEM ZUM PROBEN VON GAS
SYSTÈME D'ÉCHANTILLONNAGE DE GAZ

(30) Priority: 16.12.2020 US 202063126143 P
(43) Date of publication of application: 25.10.2023
(73) Proprietor: Draeger Medical Systems, Inc., Andover, MA 01810 (US)
(72) Inventor: MUNDY, Mark Timothy, Tomball, Texas 77377 (US); LIGUS, Edward G., N. Huntingdon, Pennsylvania 15642 (US); WARN, Russell Blair, Fresno, Texas 77545 (US); MEDINA, Larry, Tomball, Texas 77375 (US)
(74) Representative: Haseltine Lake Kempner LLP
(86) International application number: PCT/US2021/051867
(87) International publication number: WO 2022/132270

(56) References cited:
- WO-A1-2015/065390
- US-A1- 2016 061 742
- US-A1- 2020 158 653

## Description

### CROSS-REFERENCE TO RELATED APPLICATIONS

This application is related to U.S. Provisional Patent Application Serial No. 63/126,143, filed December 16, 2020, by the same inventors and having the same title as the instant application. This application claims priority to the above referenced Provisional Patent Application for all available purposes, including the right of priority.

### BACKGROUND

Gas detection tubes contain materials (*e.g*., reagents) that will react with the specific detected gas and change color on a graduated scale based on the type and the amount of gas in the sample. Gas detection tubes come in many varieties and can detect exposure to numerous gases based on the reactive material contained in each tube. Gas detection tubes may also be used to check for contaminants in compressed gases such as breathing air, as used with self-contained breathing apparatuses ("SCBAs") or airlines. As the air passes through the gas detection tube and reacts with the material within, the material changes color from its inlet end towards its outlet end. This color change is known as staining. A graduated scale is printed on each individual gas detection tube to indicate the exposure level of a particular detected gas and is measured by the length of the stain.

A technician is responsible for manual observations of the gas detection tubes within a proper (pre-defined) reading time interval to obtain an accurate reading. The technician is further responsible for recording the readings and advising others in the area of the gas exposure levels, including activating alarms when the exposure level is potentially dangerous. However, manual readings are subject to errors.

For example, an error may occur if the technician reads the gas detection tube outside of the correct reading time interval. If the technician waits too long to perform the reading, the technician may read an over-exposure to the detected gas. A more dangerous situation exists if the technician views the gas detection tube readings too early, and the chemical reaction within the detection tube has not been completed, resulting in an under-recording of the true gas exposure. In the latter situation, the technician or others could be exposed to dangerous levels of gases in the ambient air or from the compressed gas air source.

An error may also occur if the technician incorrectly reads and/or records the stain length of gas within the gas detection tube. This may occur by human error by simply misreading or misinterpreting the graduated scale printed on the gas detection tube. As the stain length directly corresponds to the concentration of the gas or contaminate, accurate reading of the stain length according to the printed graduated scale is essential. Nevertheless, gas detection tubes come in many varieties, use different printed graduated scales, and so on, making human errors more likely.

Therefore, an improved gas detection and measurement system that can reduce errors may be desirable.

US 2020/158653 A1 appears to disclose a gas detector tubes reader which can read and interpret a length of stain as an estimated gas detector tube reader. The gas detector tube reader may then compare the estimated concentration of target gas, the margin of error for the estimated concentration of target gas, and alarm limits for the target gas to determine whether and alarm should be initiated.

US 2016/061742 A1 appears to disclose a measuring device and a measurement method measure a concentration of gaseous/aerosol components of a gas mixture. A reaction carrier has a flow channel defining a reaction chamber having a optically detectable reaction material, that reacts with a gas mixture component or with a reaction product. The measuring device includes a gas-conveying assembly with a gas-conveying apparatus conveying the gas mixture and a detection assembly, which has a lighting apparatus for lighting the reaction chamber, an optical sensor for sensing the optically detectable reaction, and an evaluating unit evaluating sensor data and determining a concentration of the component of the gas mixture. The detection assembly senses a speed of a reaction front propagating in the flow direction in the reaction chamber and determines a preliminary concentration from the speed of the reaction front.

WO 2015/065390 A1 According to an example, domain name and IP address approved and disapproved membership inference may include receiving domain names and IP addresses, and mapping the domain names to the IP addresses. Domain names that belong to an approved domain name list or to a disapproved domain name list may be identified. IP addresses that belong to an approved IP address list or to a disapproved IP address list may be identified. For an unknown IP address and domain names that map to the unknown IP address, a determination is made as to whether more than a predetermined percentage of the domain names that map to the unknown IP address are in the approved domain name list. Based on the determination, the unknown IP address may be designated as approved and assigned to the approved IP address list, or alternatively, designated as disapproved and assigned to the disapproved IP address list.

### BRIEF DESCRIPTION OF THE DRAWINGS

In the drawings, like reference numbers generally indicate identical, functionally similar, and/or structurally similar elements.
FIGS. 1A-1C show a first type of gas detection tubes implemented according to one or more embodiments;
FIGS. 2A-2C show a second type of gas detection tubes implemented according to one or more embodiments; and
FIG. 3 shows an automated gas detection and measurement system according to one or more embodiments.

### DETAILED DESCRIPTION

In the following, details are set forth to provide a more thorough explanation of the embodiments. However, it will be apparent to those skilled in the art that embodiments may be practiced without these specific details. In other instances, well-known structures and devices are shown in block diagram form or in a schematic view rather than in detail in order to avoid obscuring the embodiments. In addition, features of the different embodiments described hereinafter may be combined with each other, unless specifically noted otherwise. For example, variations or modifications described with respect to one of the embodiments may also be applicable to other embodiments unless noted to the contrary. The invention is defined by the appended claims.

Further, equivalent or like elements or elements with equivalent or like functionality are denoted in the following description with equivalent or like reference numerals. As the same or functionally equivalent elements are given the same reference numbers in the figures, a repeated description for elements provided with the same reference numbers may be omitted. Hence, descriptions provided for elements having the same or like reference numbers are mutually exchangeable.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (*e.g.*, "between" versus "directly between," "adjacent" versus "directly adjacent," *etc*.)*.*

In the present disclosure, expressions including ordinal numbers, such as "first", "second", and/or the like, may modify various elements. However, such elements are not limited by the above expressions. For example, the above expressions do not limit the sequence and/or importance of the elements. The above expressions are used merely for the purpose of distinguishing an element from the other elements. For example, a first box and a second box indicate different boxes, although both are boxes. For further example, a first element could be termed a second element, and similarly, a second element could also be termed a first element without departing from the scope of the present disclosure.

Directional terminology, such as "top", "bottom", "below", "above", "front", "behind", "back", "leading", "trailing", *etc.,* may be used with reference to the orientation of the figures being described. Because parts of embodiments can be positioned in a number of different orientations, the directional terminology is used for purposes of illustration. It is to be understood that other embodiments may be utilized, and structural or logical changes may be made without departing from the scope defined by the claims. The following detailed description, therefore, is not to be taken in a limiting sense. Directional terminology used in the claims may aid in defining one element's spatial or positional relation to another element or feature, without being limited to a specific orientation.

Instructions may be executed by one or more processors, such as one or more central processing units (CPU), digital signal processors (DSPs), general purpose microprocessors, application specific integrated circuits (ASICs), field programmable logic arrays (FPGAs), or other equivalent integrated or discrete logic circuitry. Accordingly, the term "processor," as used herein refers to any of the foregoing structure or any other structure suitable for implementation of the techniques described herein. In addition, in some aspects, the functionality described herein may be provided within dedicated hardware and/or software modules. Also, the techniques could be fully implemented in one or more circuits or logic elements. A "controller," including one or more processors, may use electrical signals and digital algorithms to perform its receptive, analytic, and control functions, which may further include corrective functions. Thus, a controller is a specific type of processing circuitry, comprising one or more processors and memory, that implements control functions by way of generating control signals.

Machine learning as used in the present disclosure is a broad field of computing that includes Artificial Neural Networks, Decision Trees, Bayesian Networks, Genetic Algorithms, and any other class of algorithms available now or in the future which would be considered a machine learning algorithm. Thus, embodiments described herein are not limited to any particular machine learning algorithm. The primary distinction between machine learning and discrete programming is the use of training data.

A discrete program relies solely on a programmer's fixed set of rules that an algorithm will follow. It cannot adapt on its own. A machine learning algorithm will use training data and classifications preset for the training data to automatically adjust its internal parameters to properly identify, then utilize the "features" that it will later use on live data to classify pictures properly. There may be cases where the machine learning algorithm identifies patterns of the data that humans did not previously identify, and it may use those patterns for a higher quality classification.

Therefore, in the context of this disclosure, the use of the term "machine learning algorithm" specifies the use of one machine learning algorithm, or a combination of different types of machine learning algorithms. When more than one machine learning algorithm is utilized for the classification of gas tube readings, the organization of the many machine learning algorithms may include the use of multiple machine learning algorithms in a sequential manner where the output from one or many machine learning algorithms feeds data as input to one or many other machine learning algorithms, the use of multiple machine learning algorithms utilized in a parallel manner where the outputs of all machine learning algorithms are compared for higher quality classification of the gas tube readings, or any combination of both.

A sensor refers to a component which converts a physical quantity to be measured to an electric signal, for example, a current signal or a voltage signal. The physical quantity may for example comprise electromagnetic radiation (*e.g*., photons of infrared or visible light), a magnetic field, an electric field, a pressure, a force, a temperature, a current, or a voltage, but is not limited thereto. For example, a camera is a type of sensor that captures image data for further processing. A processor may be configured to process and analyze the image data *(e.g.,* pixel data) to make one or more determinations.

Signal conditioning, as used herein, refers to manipulating an analog signal in such a way that the signal meets the requirements of a next stage for further processing. Signal conditioning may include converting from analog to digital (*e.g*., via an analog-to-digital converter), amplification, filtering, converting, biasing, range matching, isolation and any other processes required to make a sensor output suitable for processing after conditioning.

The invention provides a gas sampling system according to claim 1. One or more embodiments provide a gas sampling system, including: a gas detection tube including an inlet for receiving a gas sample, the gas detection tube further including an interior cavity into which the gas sample flows, the interior cavity containing at least one reagent material that reacts with a target gas to cause a visual change with a stain length corresponding to a concentration level of the target gas; an imaging device configured to generate image data of the gas detection tube during a sampling period; and at least one processor configured to receive the image data from the imaging device, analyze the image data for the visual change corresponding to the gas detection tube, and determine the concentration level of the target gas based on the stain length of the visual change.

The invention provides a method of sampling gas according to claim 11. One or more embodiments provide a method of sampling gas, including: providing at least one reagent material in an interior cavity of a gas detection tube, the gas detection tube including an inlet for receiving a gas sample and an outlet with the interior cavity arranged therebetween; exposing the at least one reagent material that reacts with a target gas to the gas sample to cause a visual change with a stain length corresponding to a concentration level of the target gas; generating, by an imaging device, image data of the gas detection tube during a sampling period; analyzing, by at least one processor, the image data for the visual change corresponding to the gas detection tube; and determining, by at least one processor, the concentration level of the target gas based on the stain length of the visual change.

One or more embodiments provide a gas sampling system, including: a plurality of gas detection tubes, each including an inlet for receiving a respective gas sample, and each gas detection tube further including an interior cavity into which the respective gas sample flows, the interior cavity containing at least one reagent material that reacts with a respective target gas to cause a respective visual change with a stain length corresponding to a concentration level of the respective target gas; an imaging device configured to capture at least one image of the plurality of gas detection tubes during a sampling period and generate image data corresponding to the at least one image; and at least one processor configured to receive the image data from the imaging device, identify each of the plurality of gas detection tubes in the image data, analyze the image data for the respective visual change corresponding to each identified gas detection tube, and determine the concentration level of the respective target gas for each identified gas detection tube based on the stain length of the respective visual change.

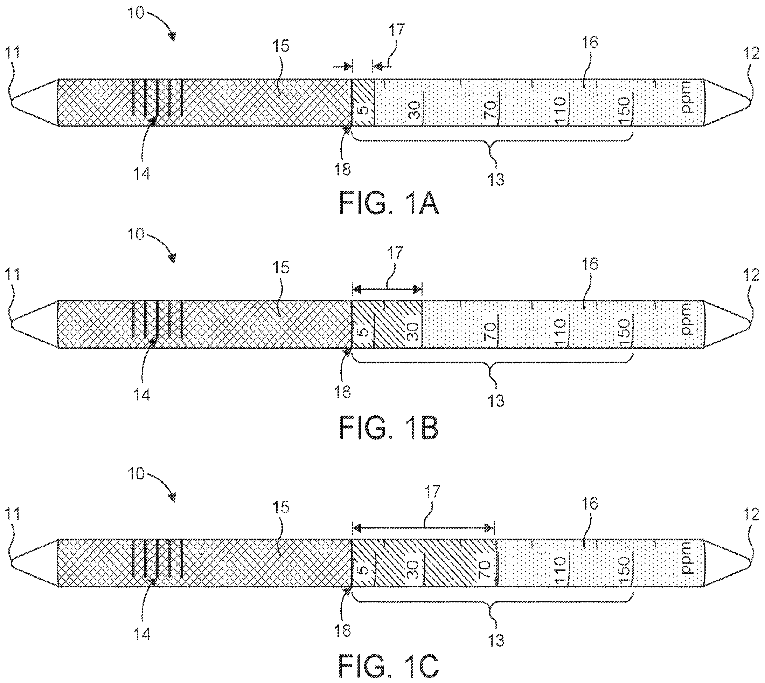

FIGS. 1A-1C show carbon monoxide gas detection tubes 10 implemented according to one or more embodiments. In particular, the carbon monoxide gas detection tubes 10 indicate both a presence and a concentration of carbon monoxide gas inside the tube. The carbon monoxide gas detection tubes 10 each include an air inlet 11 at one end and an air outlet 12 at an opposite end in the lengthwise dimension of the carbon monoxide gas detection tubes 10. The carbon monoxide gas detection tubes 10 each further include an interior cavity that contains materials, at least one of which reacts with a target gas that is intended for detection by the carbon monoxide gas detection tubes 10, in this case, carbon monoxide.

A pump may be attached to the air outlet 12 of the tube 10 and a regulated amount of air is pulled into the air inlet 11 of the tube for testing. Alternatively, the pump may be attached to the air inlet 11 and pumped into the tube. Alternatively, gas may diffuse into the tube according to Fick's laws of diffusion. Another possible implementation may include connecting a pressurized gas container, attached directly or through a pressure-controlled metering device, to the inlet 11 of the tube.

The gas detection tubes 10 further include a graduated scale 13 printed thereon. The graduated scale 13 includes line markers (sometimes called concentration markers) extending transverse to the length of the gas detection tube (extending circumferentially around the gas detection tube). The line markers are arranged at different length increments that correspond to different concentration levels in parts per million (ppm). The ppm assigned to each line marker increases in the direction from the air inlet 11 to the air outlet 12. The scale used corresponds to the type of target gas, where different scales may be used for different types of target gases. In addition, the graduated scale 13 includes a separating ring 18 that marks a boundary between a prelayer portion of the tube 10 and an indicating layer 16 of the tube 10. The prelayer portion 15 of the tube 10 is inactive and does not undergo a color change during exposure of the target gas. The indicating layer 16 includes an activated portion 17 that is exposed to the target gas within an exposure time and undergoes a visual change and an inactive portion (*i.e.,* a remaining portion of indicating layer 16 that is not exposed to the target gas within the exposure time and thus does not undergo a visual change)

The gas detection tubes 10 may further include an identifier 14 printed thereon that identifies the type of detection tube, and thereby identifies the type of target gas for which the detection tube is configured to detect (*e.g.,* according to its interior materials). In this example, the identifier 14 is a bar code. However, any type of identifier, including numeric, alphanumeric, quick response code, and the like may be used. To assist in automated activities, the identifier should be computer-readable. Similarly, other methods, such as RFID (Radio-frequency identification) tags could be attached or affixed such that an RFID reader could identify a particular tube and associated test. These tags may help to further reduce human errors such as misreading or misidentification of the tubes.

The gas detection tubes include interior materials, including one or more reactive colorimetric materials or reagents that undergo a colorimetric reaction in presence of a target gas, in this case, carbon monoxide. For example, the reagents for a carbon monoxide gas detection tube may include iodine pentoxide, selenium dioxide, and fuming sulfuric acid. The gas detection tubes may further include a carrier material or prelayer that is used to trap potential interferents and to act as a desiccant. For example, the carrier material for a carbon monoxide gas detection tube may include chromate.

The one or more reagents in gas detection tubes indicate the presence of the target gas by undergoing a visual change that corresponds to the type of gas detected. In the case of carbon monoxide gas detection tubes, the visual change is a color change from one color to another color. The prelayer portion 15 of the tube 10 is inactive and does not undergo a color change during exposure of the target gas. The activated portion 17 of the indicating layer 16 consists of an interior material which undergoes a visual change when exposed to the target gas. The prelayer 15 is visually separated from the indicating layer 16 (and separated by the activated portion 17 after exposure to the target gas) by the separating ring 18. Thus, the separating ring 18 indicates one end of the activated portion 17 from which the stain length thereof is to be measured. The portions 15, 16, 17, and 18 are visually distinct from one another.

A particular visual change, such as a change to a specific color, may be specific to a reaction to a particular gas. That is, different gases may cause different color reactions in different types of gas detection tubes, where each type of tube is configured via its reagents to detect a particular target gas. For example, material in a carbon monoxide gas detection tube may turn from a neutral, non-activated color, such as white, to brownish-yellow, whereas material in a carbon dioxide gas detection tube may turn from a neutral, non-activated color, such as white, to blue. Some chemical reactions used in certain detection tubes may cause a chemical luminescence or may result in a formation of a pattern, both of which are visual changes from an inactive state to an activated state that can be detected and measured. The visual change may consist of one or more colors (*e.g.,* monochromatic, dichromatic, *etc.*)*.*

The one or more reagents in gas detection tubes also indicate the concentration of the detected gas. The target gas is absorbed by or bound to the one or more of the interior materials towards, thereby causing the chemical reaction. The length of the visual change, known as the stain length, directly corresponds to the concentration of the detected gas, which can be read out in parts per million (ppm). For example, the length of the visual change caused by the reaction (*e.g.,* the length of the activated portion 15) is measured along the length of the detection tube (*e.g.,* from the inlet of the detection tube towards the outlet of the detection tube). The reaction that triggers the visual change extends lengthwise into the detection tube and reaches a stain length within a predetermined reading time interval (*e.g*., a predetermined sampling time interval) that corresponds to the desired level of exposure to the target gas. For example, in carbon monoxide gas detection tubes, the length of the color stain caused by the reaction to carbon monoxide is measured. The concentration of carbon monoxide in parts per million is determined based on the measured length of the color stain. The predetermined reading time interval is a sampling period that is used to ensure that an under-exposure or an over-exposure to the detected gas is avoided and to otherwise ensure that the reading satisfies exposure requirements.

In the examples illustrated in FIGS. 1A-1C, concentrations of 5 ppm, 30 ppm, and 70 ppm are shown, respectively. Thus, the concentration of carbon monoxide can be read out by referring to the stain length of the activated portion 15 in each detection tube 10.

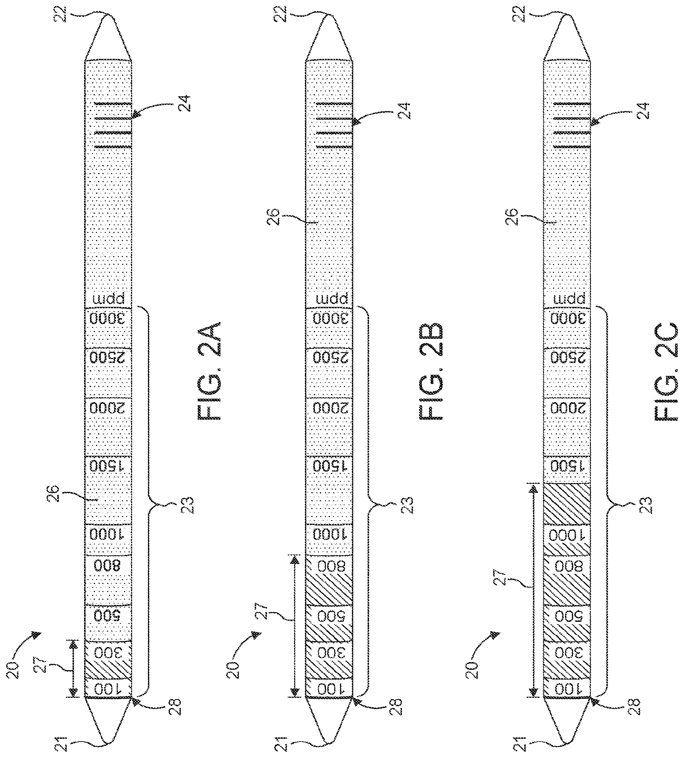

Similarly, FIGS. 2A-2C show carbon dioxide gas detection tubes 20 implemented according to one or more embodiments. The carbon dioxide gas detection tubes 20 indicate both a presence and a concentration of carbon dioxide gas inside the tube. The carbon dioxide gas detection tubes 20 include similar elements described above in reference to the carbon monoxide gas detection tubes 10, including an air inlet 21, an air outlet 22, a printed graduated scale 23, a printed identifier 24, a separating marker 28, and interior materials that indicate a presence and concentration of carbon dioxide gas according to an activated portion 27 and an inactive portion 26 of an indicating layer. The stain length of the activated portion 27 to be read for measurement extends from the separating marker 28 to the inactive portion 26.

In the examples illustrated in FIGS. 2A-2C, concentrations of 300 ppm, 800 ppm, and 1300 ppm are shown, respectively. Thus, the concentration of carbon dioxide can be read out by referring to the stain length of the activated portion 27 in each detection tube 20.

As illustrated, the overall dimensions of the tubes are generally similar, while the concentrations levels being measured are different depending on which tube is being used during testing. This similarity in the dimensions of the tubes is one contributing factor that may lead to user errors. Accordingly, automating the identification and reading processes of the tests will help eliminate errors and provide additional safety to workers that rely on these tests to keep them safe.

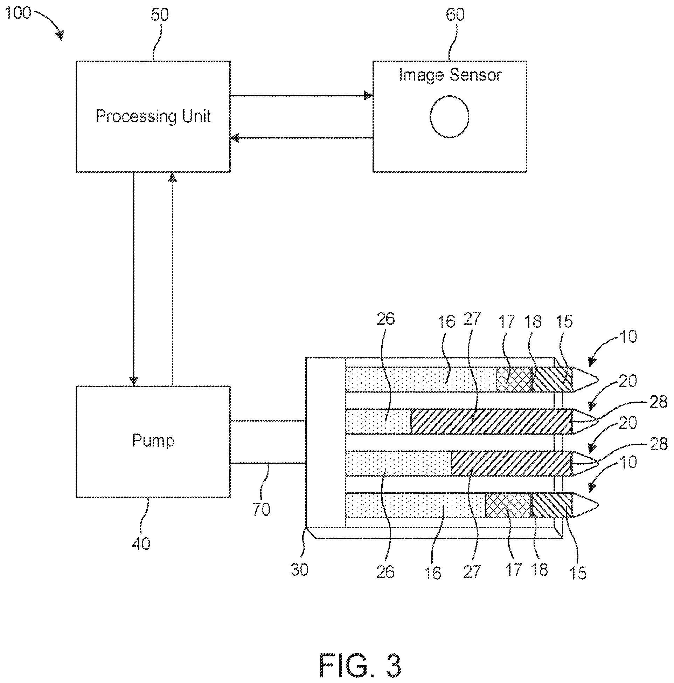

FIG. 3 shows an automated gas detection and measurement system 100 according to one or more embodiments. System 100 is an air sampling system that includes a detection tube receptacle 30, an air pump 40, a processing unit 50 comprising one or more processors, and an imaging device 60.

The detection tube receptacle 30 is configured to hold one or more gas detection tubes, which may be of the same or of different types. Here, two carbon monoxide gas detection tubes 10 and two carbon dioxide gas detection tubes 20 are inserted into the detection tube receptacle 30 as one example. The detection tube receptacle 30 is coupled to the pump 40 via a tube 70. Each of the gas detection tubes 10, 20 has an air inlet coupled to or exposed to one or different gas sources, depending on implementation and the type of source or environment being analyzed. For example, one or more gas detection tubes may be connected to receive an air sample simultaneously.

In one example, four different gas detection tubes configured to detect four different target gases or contaminants may be coupled at their air inlets to a same gas source (*e.g.,* a compressed gas source, such as a breathing tank that contains breathing air). In another example, multiple sources may be analyzed simultaneously using duplicate types of gas detection tubes.

Accordingly, the pump 40 is configured to draw gas into each of the gas detection tubes 10, 20 via tube 70 from one or more sources during a measurement cycle (*i.e.,* sampling period). At the start of a measurement cycle, the pump 40 is activated and the corresponding gases are drawn into each of the gas detection tubes 10, 20. The pump 40 may be activated manually or by an electronic control signal transmitted by the processing unit 50. As such, the processing unit 50 may include a controller (not separately shown) that controls and triggers the activation of the pump 40. The processing unit 50 may start a timer (*e.g.,* a counter, also not separately shown) at the start time of the measurement cycle (*e.g.,* at the time the electronic control signal is transmitted to the pump 40). The timer may be used to monitor one or more predetermined reading time intervals corresponding to the exposure time for each of the gases. Different detection tubes may be assigned the same or different predetermined reading time intervals (sampling time intervals) based on specific exposure requirements for each target gas.

In response to a manual trigger of the pump 40, the pump may be configured to transmit a measurement cycle start signal to the processing unit 50 that indicates that a measurement cycle has started. The processing unit 50 may start the timer upon receipt of the measurement cycle start signal from the pump.

Alternatively, as will be described in further detail below, an imaging device such as a camera may be configured to detect an initial visual change in one or more of the detection tubes 10, 20, and may send a measurement cycle start signal to the processing unit 50 in response to detecting the initial visual change. Again, the measurement cycle start signal indicates that a measurement cycle has started and the processing unit 50 may start its timer to monitor one or more predetermined reading time intervals.

Alternatively, the start of the measurement cycle may be indicated to the processing unit 50 manually.

Together, the imaging device 60, such as a camera, and the processing unit 50 perform electronic measurement of the gas detection tubes arranged in the field of view of the imaging device 60. The processing unit 50 may be configured to autonomously trigger an image capture operation of one or more gas detection tubes via an image capture trigger signal. The image capture trigger signal may be generated at the start of the measurement cycle or in accordance with the timer and one or more predetermined reading time intervals. The imaging device 60 is configured to perform the image capture operation in response to receiving an image capture trigger signal and transmit image data corresponding to the image capture operation to the processing unit 50 for processing and analysis. The image capture operation may include taking one or more still images or a video of the gas detection tubes during a sampling period.

For example, at the start of the measurement cycle, the imaging device 60 may be configured to capture an image of the gas detection tubes arranged in its field of view and transmit the corresponding image data to the processing unit 50 for identification of the gas detection tubes. In this circumstance, the processing unit 50 is configured to extract the identifier 14, 24 from each the gas detection tube and identify both the type of gas detection tube and its corresponding position or location in the field of view (*e.g*., for future reference). By identifying the type for each gas detection tube, the processing unit 50 can determine a number of parameters or characteristics, including a predetermined reading time interval for each gas detection tube, and the expected characteristic of the visual change for each gas detection tube according to a machine learning algorithm. The expected characteristic of the visual change can include a certain color change, a triggered luminescence, a pattern formation, and the like. The location of each expected visual change can be assigned within a pixel matrix of corresponding image data. In other words, a region of interest for each gas detection tube within the pixel data of an image can be determined by the processing unit 50.

In this example, the processing unit 50 may trigger a further image capture at a lapse of the predetermined reading time interval for each gas detection tube, with those having the same predetermined reading time interval being analyzed within a same image and with those having different predetermined reading time intervals being analyzed in different images. That is, an image is taken for each different predetermined reading time interval (*i.e.,* sampling time interval) to correspond to the proper exposure time for each type of target gas. The proper exposure time may be defined as a discrete time instance or a time interval in which the amount of exposure is acceptable. The processing unit 50 is configured to analyze the further image captures for detecting target gases and corresponding concentration levels according to a machine learning algorithm.

Alternatively, multiple (sequential) still images may be captured throughout the sampling period (*e.g*., triggered at the start of a measurement cycle via the processing unit 50) and may be analyzed by the processing unit 50 at the end of the sampling period, including identification of each type of gas detection tube. Based on the determined type of each gas detection tube, a corresponding predetermined reading time interval may be determined and used by the processing unit 50 to select one of the still images captured at the corresponding predetermined reading time interval or within an acceptable tolerance window thereof. In other words, the processing unit 50 selects one still image out of the multiple (sequential) still images for each gas detection tube to be used for analysis, where each still image is selected based on the corresponding predetermined reading time interval determined for each gas detection tube and based on the capture time of the still images. The selected capture time may match a predetermined reading time corresponding to the desired exposure time of a reagent material to the gas sample. The desired exposure time is predetermined based on the type of gas detection tube (*e.g.,* the type of reagent materials) and the batch characteristics of the interior material thereof. The processing unit 50 is configured to analyze the selected image captures for detecting target gases and corresponding concentration levels according to a machine learning algorithm.

Alternatively, the processing unit 50 may trigger the imaging device 60 to capture a video or a video stream at the start of a measurement cycle for the duration of the sampling period. The processing unit 50 may be configured to analyze the image data from the video, including identification of each type of gas detection tube. Based on the determined type of each gas detection tube, a corresponding predetermined reading time interval may be determined and used by the processing unit 50 to select a time instance from the video for analysis. Each selected time instance may be matched with a corresponding predetermined reading time for each gas detection tube, the times of which may be the same or different.

In particular, for each gas detection tube, the processing unit 50 selects a video frame from the video that corresponds to the selected time instance for that gas detection tube, and image data from the selected video frame is used for further processing. Each video frame may have, for example, a corresponding capture time that the processing unit 50 compares with the selected time instance for the selection process. The selected capture time may match a predetermined reading time corresponding to the desired exposure time of the reagent material to the gas sample. The desired exposure time is predetermined based on the type of gas detection tube (*e.g.,* the type of reagent materials) and the batch characteristics of the interior material thereof. The processing unit 50 then extracts image data corresponding to the selected time instance (*i.e.,* corresponding to the selected video frame) for each gas detection tube, and uses the extracted image data for detecting target gases and corresponding concentration levels according to a machine learning algorithm.

Ultimately, the processing unit 50 selects an image, whether it be a still image or a video frame, for each gas detection tube and uses each selected image for analysis. The selected image corresponds to the correct exposure time for a target gas to prevent inaccurate readings due to under-exposure or over-exposure. The processing unit 50 is programmed with a machine learning algorithm that is trained to recognize the visual change that indicates the chemical reaction for each gas detection tube, thereby detecting both the presence of a target gas in each detection tube and the extent of the chemical reaction - indicating the concentration level.

A target gas can be detected by the processing unit 50 by performing a pixel analysis on the selected image, particularly, in a pixel area of the selected image. The pixel area is a region or group or pixels that the processing unit 50 associates with the gas detection tube under analysis. The processing unit 50 is configured to, via the machine learning algorithm, detect a visual change corresponding to the expected chemical reaction of a particular gas detection tube. It does this by analyzing the pixel data, and more particularly, the color characteristics of the pixel data extracted from the selected image to detect a target gas according to its predetermined color characteristic. For example, the processing unit 50 may detect a brownish-yellow color in the pixel data corresponding to one of the carbon monoxide gas detection tubes 10 if carbon monoxide is present.

The processing unit 50 is further configured to, via the machine learning algorithm, detect the separating marker 18, 28, determine a stain length of the detected visual change (*i.e.,* the length of the activated portion 17, 27) extending lengthwise from the separating marker 18, 28 to the inactive portion of the indicating layer 16, 26, and correlate the measured stain length to a concentration level for the target gas to which the gas detection tube is sensitive.

To determine the measured stain length, the processing unit 50 may measure the lengthwise extension of the activated portion 17, 27, and determine the concentration level based on the determined length and the identified type of the gas detection tube. The identified type of the gas detection tube may not only indicate the type of target gas to which the gas detection tube is sensitive but also indicate other variables specific to the batch of the interior materials.

Different batches of the interior materials, even when composed of the same materials, may vary from batch to batch with variations attributed to granular size, quality of reagent, and quality of carrier material. Granular size of the materials may affect the stain length. Impurities within a batch may also affect the chemical reaction and the extent thereof thereby affecting the stain length. Thus, two gas detection tubes used for the same target gas but with interior materials manufactured in different batches may result in two different stain lengths for the same concentration level of the target gas.

As a result of these variable batch characteristics, the printed identifiers 14, 24 may also provide batch information (*e.g*., batch number and/or the batch characteristics themselves) that the processing unit 50 may use to more accurately correlate the measured stain length to a concentration level for not only the type of target gas but for the batch of interior materials. The processing unit 50 may use a batch number and the type of gas detection tube, for example, to determine a graduated scale to be used as a reference to the determined stain length of the visual change. The processing unit 50 may then determine the concentration level based on a comparison of the determined graduated scale to the determined stain length. The graduated scale may be output from a database based on the batch number, the type of gas detection tube, the type of reagent materials, and/or the type of target gas, all of which may be determined from the printed identifiers 14, 24. The processing unit 50 may determine this information by scanning or otherwise detecting the printed identifiers 14, 24 prior to or concurrently with performing its analysis and measurements.

Additionally, or alternatively, to determine the measured stain length, the processing unit 50 may also compare the length of the visual change to the printed graduated scale 13, 23 for the particular gas detection tube, and classify the exposure level based on the comparison result. The printed graduated scale 13, 23 may be adjusted for the particular batch of interior materials. Thus, the machine learning algorithm may be configured to recognize the location of the markings for each individual gas detection tube as well as the extent of the visual change within the interior material. From the image data, the processing unit 50 may, for example, detect the line markers of each printed graduated scale 13, 23, detect their corresponding concentration levels, and determine the concentration level based on a penetration depth of the activated portion 17, 27 and the detected line markers.

The processing unit 50 may perform its detection and analysis for all gas detection tubes 10, 20 simultaneously and in parallel. The processing unit 50 is further configured to record the results of the detection and analysis in a memory device. The processing unit 50 is further configured to compare the measured concentration levels to predetermined hazard thresholds corresponding to dangerous concentration levels, and trigger an alert or an alarm automatically when gases have reached dangerous levels or when a contaminant gas has been detected. These alerts or alarms may alert an operator or an individual in a surrounding area of a hazard in the gas or in the environment.

In view of the above, the air sampling system 100 is comprised of a regulated airflow to one or more gas detection tubes 10, 20 containing materials that will react with the specific detected chemical *(i.e.,* reagent) and induce a visual change in a graduated scale based on the amount of a target gas in the sample. An imaging device 60 photographs the gas detection tubes 10, 20 during a sampling period and transmits the image data in an electronic format to a processing unit 50 running a machine learning algorithm trained to recognize the visual change, compare it to the graduated scale on the corresponding tube, and classify the exposure level. The machine learning algorithm is trained to recognize and classify the gas exposure levels against the specific graduation scales of one or more gas detection tubes.

In addition, the processing unit 50 may apply two or more different machine learning algorithms for its analysis of the image data and compare the results for higher accuracy. Also, one type of machine learning may be better at classifying one type of tube than another type of machine learning algorithm, and the processing unit 50 may be configured to select among different types of machine learning algorithms based on the identified type of gas detection tube (*e.g.,* based on information extracted from the printed identifiers 14, 24). When two or more types are in an image, the processing unit 50 may selectively use different types of machine learning algorithms to apply the best suited machine learning algorithm to each corresponding gas detection tube. There is also the possibility that chaining different machine learning algorithms together to verify the answers of each would lead to higher accuracy.

The processing unit 50 may apply discrete programming (*i.e.,* one or more discrete algorithms), machine learning algorithms (*i.e.,* one or more machine learning algorithms), or a combination thereof. A discrete program would rely on a programmer to set the rules the algorithm will follow to, for example, read printed identifiers 14, 24, classify the pictures into a category based on the determined stain length measured from the separating ring 18, 28, determine a concentration level of a target gas, generate alarms, *etc.,* as disclosed herein.

Benefits can be realized from system 100, including automatic and more accurate concentration level readings, reduction or elimination of errors caused by under-exposure or over-exposure, simultaneous readings of multiple gas detection tubes of the same or of different types while also factoring in the manufacturing batch of the interior materials, and more accurate recordings of the analyzed data (*i.e.,* the reduction of data entry errors). The results obtained by the processing unit 50 may also be compared with manual observations by a technician. Alerts or alarms may also be programmed for automatic detection and triggering based on a perceived hazard, increasing safety. For example, the processing unit 50 may be configured to store the determined concentration level of the respective target gas for each identified gas detection tube and trigger an alarm if at least one of the determined concentration levels exceeds a predetermined concentration threshold. Reporting and inventory tracking can be enhanced with the additional ability for the imaging device 60 to photograph and interpret an identifier (*e.g.,* a barcode) on a box of gas detection tubes and store information related to the part number and batch number for its corresponding gas detection tubes. The identifier detected on a box of gas detection tubes may be used as similarly described for identifiers 14, 24.

While various embodiments have been disclosed, it will be apparent to those skilled in the art that various changes and modifications can be made which will achieve some of the advantages of the concepts disclosed herein without departing from the scope of the invention as defined by the appended claims. It will be obvious to those reasonably skilled in the art that other components performing the same functions may be suitably substituted. It is to be understood that other embodiments may be utilized, and structural or logical changes may be made without departing from the scope of the present invention. It should be mentioned that features explained with reference to a specific figure may be combined with features of other figures, even in those not explicitly mentioned. Such modifications to the general inventive concept are intended to be covered by the appended claims.

It is further to be noted that methods disclosed in the specification or in the claims may be implemented by a device having means for performing each of the respective acts of these methods. For example, the techniques described in this disclosure may be implemented, at least in part, in hardware, software, firmware, or any combination thereof. For example, various aspects of the described techniques may be implemented within one or more processors, including one or more microprocessors, DSPs, ASICs, or any other equivalent integrated or discrete logic circuitry, as well as any combinations of such components and one or more machine learning algorithms.

Further, it is to be understood that the disclosure of multiple acts or functions disclosed in the specification or in the claims may not be construed as to be within the specific order. Therefore, the disclosure of multiple acts or functions will not limit these to a particular order unless such acts or functions are not interchangeable for technical reasons. Furthermore, in some embodiments a single act may include or may be broken into multiple sub acts. Such sub acts may be included and part of the disclosure of this single act unless explicitly excluded.

The invention provides a gas sampling system according to claim 1, which comprises at least one processor configured to monitor for a reading time and control the imaging device to capture a sample image at the reading time, wherein the reading time corresponds to a desired exposure time of the at least one reagent material to the gas sample, and the analyzed image data corresponds to the sample image. The at least one processor may be configured to monitor for the reading time based on a timer initialized at a start of the sampling period. The at least one processor may be configured to control the imaging device to capture an initial image at a start of the sampling period, the imaging device may be configured to capture the initial image to generate initial image data, and the at least one processor may be further configured to: determine a characteristic of the gas detection tube from the initial image data; and determine the reading time based on the determined characteristic of the gas detection tube.

The imaging device may be configured to capture a plurality of images of the gas detection tube at different sampling times during the sampling period and generate a plurality of image data, each corresponding to one of the plurality of images, the at least one processor may be configured to select image data having a sampling time that corresponds to a reading time from the plurality of image data, wherein the reading time corresponds to a desired exposure time of the at least one reagent material to the gas sample, and the at least one processor may be further configured to analyze the selected image data for the visual change corresponding to the gas detection tube, and determine the concentration level of the respective target gas based on the stain length of the visual change. In addition, the at least one processor may be further configured to: determine a characteristic of the gas detection tube from the plurality of image data; and determine the reading time based on the determined characteristic of gas detection tube. the imaging device is configured to capture a video of the gas detection tube during the sampling period and generate video image data corresponding to a plurality of video frames of the video, the at least one processor may be configured to receive the video image data, select a video frame from the plurality of video frames, analyze the video image data corresponding to the selected video frame for the visual change corresponding to the gas detection tube, and determine the concentration level of the respective target gas based on the stain length of the visual change.

This embodiment may have the selected video frame associated with a sampling time that corresponds to a reading time, wherein the reading time corresponds to a desired exposure time of the at least one reagent material to the gas sample; the at least one processor may be further configured to determine a characteristic of the gas detection tube from the plurality of image data, and determine the reading time based on the determined characteristic of gas detection tube; the at least one processor may be further configured to identify the gas detection tube, determine a graduated scale based on the identified gas detection tube, and compare the stain length to the determined graduated scale to determine the concentration level of the target gas.

This embodiment may include identifying the gas detection tube includes determining at least one of a type of the gas detection tube or a manufacturing batch of interior materials of the gas detection tube, and the at least one processor may be configured to determine the graduated scale based on at least one of the type of the gas detection tube or the manufacturing batch of the interior materials or the at least one processor may be further configured to determine a reading time based on the identified gas detection tube, and analyze the image data sampled at the determined reading time for the visual change corresponding to the gas detection tube.

Finally, this embodiment may include the gas detection tube having a graduated scale printed on a surface of the gas detection tube, wherein the graduated scale comprises a plurality of concentration markings, wherein the at least one processor may be configured to read the graduated scale from the image data, compare the stain length to the graduated scale, and determine the concentration level of the target gas based on a comparison of the stain length to the graduated scale and/or the at least one processor may be further configured to identify the gas detection tube, including determining a characteristic of the gas detection tube, determine a characteristic of the visual change based on the determined characteristic of the gas detection tube, and analyze the image data for the determined characteristic of the visual change.

While the above embodiment is represented by gas sampling system having a gas detection tube, it is to be understood that the above referenced embodiment may be implemented as a method or part of a different system or apparatus as outlined in the appended claims, which define the scope of the invention.

## Claims

1. A gas sampling system (100), comprising:
a receptacle (30) configured to receive a gas detection tube (10, 20), the gas detection tube (10, 20) comprising an inlet for receiving a gas sample, the gas detection tube (10, 20) further (10, 20) comprising an interior cavity into which the gas sample flows, the interior cavity containing at least one reagent material that reacts with a target gas to cause a visual change with a stain length corresponding to a concentration level of the target gas;
an imaging device (60) configured to generate image data of the gas detection tube (10, 20) during a sampling period;
at least one processor configured to receive the image data from the imaging device (60), analyze the image data for the visual change corresponding to the gas detection tube (10, 20), determine the concentration level of the target gas based on the stain length of the visual change; and monitor for a reading time and control the imaging device (60) to capture a sample image at the reading time;
wherein the reading time corresponds to a desired exposure time of the at least one reagent material to the gas sample, and the analyzed image data corresponds to the sample image.

2. The gas sampling system (100) of claim 1, wherein the at least one processor is configured to monitor for the reading time based on a timer initialized at a start of the sampling period.

3. The gas sampling system (100) of claim 1, wherein:
the at least one processor is configured to control the imaging device (60) to capture an initial image at a start of the sampling period,
the imaging device (60) is configured to capture the initial image to generate initial image data, and
the at least one processor is further configured to:
determine a characteristic of the gas detection tube (10, 20) from the initial image data; and
determine the reading time based on the determined characteristic of the gas detection tube (10, 20).

4. The gas sampling system (100) of claim 1, wherein:
the imaging device (60) is configured to capture a plurality of images of the gas detection tube (10, 20) at different sampling times during the sampling period and generate a plurality of image data, each instance of image data corresponding to one of the plurality of images,
the at least one processor is configured to select an instance of image data having a sampling time that corresponds to a reading time from the plurality of image data, wherein the reading time corresponds to a desired exposure time of the at least one reagent material to the gas sample, and
the at least one processor is further configured to analyze the selected instance of image data for the visual change corresponding to the gas detection tube (10, 20), and determine the concentration level of the respective target gas based on the stain length of the visual change, optionally wherein:
the at least one processor is further configured to: determine a characteristic of the gas detection tube from the plurality of image data; and determine the reading time based on the determined characteristic of gas detection tube.

5. The gas sampling system (100) of claim 1, wherein:
the imaging device (60) is configured to capture a video of the gas detection tube (10, 20) during the sampling period and generate video image data corresponding to a plurality of video frames of the video,
the at least one processor is configured to receive the video image data, select a video frame from the plurality of video frames, analyze the video image data corresponding to the selected video frame for the visual change corresponding to the gas detection tube (10, 20), and determine the concentration level of the respective target gas based on the stain length of the visual change, optionally wherein the selected video frame has a sampling time that corresponds to a reading time, wherein the reading time corresponds to a desired exposure time of the at least one reagent material to the gas sample, and further optionally wherein:
the at least one processor is further configured to determine a characteristic of the gas detection tube from the plurality of image data, and determine the reading time based on the determined characteristic of gas detection tube.

6. The gas sampling system (100) of claim 1, wherein:
the at least one processor is further configured to identify the gas detection tube (10, 20), determine a graduated scale (13) based on the identified gas detection tube (10, 20), and compare the stain length to the determined graduated scale (13) to determine the concentration level of the target gas, and optionally wherein:
identifying the gas detection tube (10, 20) includes determining at least one of a type of the gas detection tube (10, 20) or a manufacturing batch of interior materials of the gas detection tube (10, 20), and the at least one processor is configured to determine the graduated scale based on at least one of the type of the gas detection tube (10, 20) or the manufacturing batch of the interior materials, and further optionally wherein
the at least one processor is further configured to determine a reading time based on the identified gas detection tube (10, 20), and analyze the image data sampled at the determined reading time for the visual change corresponding to the gas detection tube (10, 20).

7. The gas sampling system (100) of claim 1, wherein:
the gas detection tube (10, 20) comprises a graduated scale (13) printed on a surface of the gas detection tube (10, 20), wherein the graduated scale (13) comprises a plurality of concentration markings,
wherein the at least one processor is configured to read the graduated scale (13) from the image data, compare the stain length to the graduated scale (13), and determine the concentration level of the target gas based on a comparison of the stain length to the graduated scale (13).

8. The gas sampling system (100) of claim 1, wherein:
the at least one processor is further configured to:
(i) identify the gas detection tube (10, 20), including determining a characteristic of the gas detection tube (10, 20), determine a characteristic of the visual change based on the determined characteristic of the gas detection tube (10, 20), and analyze the image data for the determined characteristic of the visual change; and/or
(ii) store the determined concentration level of the target gas for the identified gas detection tube (10, 20) and trigger an alarm if the determined concentration level exceeds a predetermined concentration threshold.

9. The gas sampling system (100) of claim 1, wherein:
the gas detection tube (10, 20) comprises a graduated scale (13) printed on a surface thereof, wherein the graduated scale (13) comprises a plurality of concentration markings,
wherein, the at least one processor is configured to read the graduated scale (13) from the image data for the identified gas detection tube (10, 20), compare the stain length to the graduated scale (13), and determine the concentration level of the target gas based on a comparison of the stain length to the graduated scale (13).

10. The gas sampling system as claimed in any preceding claim,
wherein the receptacle is one of a plurality of receptacles, each of the plurality of receptacles configured to receive at least one gas detection tube, each respective gas detection tube comprising an inlet for receiving a respective gas sample, and each respective gas detection tube further comprising an interior cavity into which the respective gas sample flows, the interior cavity containing at least one reagent material that reacts with a respective target gas to cause a respective visual change with a stain length corresponding to a concentration level of the respective target gas.

11. A method of sampling gas, comprising:
providing at least one reagent material in an interior cavity of a gas detection tube (10, 20), the gas detection tube (10, 20) comprising an inlet for receiving a gas sample and an outlet with the interior cavity arranged therebetween;
exposing the at least one reagent material that reacts with a target gas to the gas sample to cause a visual change with a stain length corresponding to a concentration level of the target gas;
generating, by an imaging device (60), image data of the gas detection tube (10, 20) during a sampling period;
analyzing, by at least one processor, the image data for the visual change corresponding to the gas detection tube (10, 20);
determining, by at least one processor, the concentration level of the target gas based on the stain length of the visual change; and
monitoring, by at least one processor, for a reading time and controlling the imaging device (60) to capture a sample image at the reading time, wherein the reading time corresponds to a desired exposure time of the at least one reagent material to the gas sample, and the analyzed image data corresponds to the sample image.

12. The method of claim 11, further comprising:
capturing, by the imaging device (60), a plurality of images of the gas detection tube (10, 20) at different sampling times during the sampling period to generate a plurality of image data instances, each instance of image data corresponding to one of the plurality of images and one of the different sampling times;
selecting, by the at least one processor, an instance of image data having a sampling time that corresponds to a reading time from the plurality of image data instances, wherein the reading time corresponds to a desired exposure time of the at least one reagent material to the gas sample; and
analyzing, by the at least one processor, the selected image data instance for the visual change corresponding to the gas detection tube (10, 20) and
determining, by the at least one processor, the concentration level of the respective target gas based on the stain length of the visual change, optionally further comprising:
determining, by the at least one processor, a characteristic of the gas detection tube from the plurality of instances of image data; and
determining, by the at least one processor, the reading time based on the determined characteristic of the gas detection tube.

13. The method of claim 11, further comprising:
capturing, by the imaging device (60), a video of the gas detection tube (10, 20) during the sampling period to generate video image data corresponding to a plurality of video frames of the video,
selecting, by the at least one processor, a video frame from the plurality of video frames;
analyzing, by the at least one processor, the video image data corresponding to the selected video frame for the visual change corresponding to the gas detection tube (10, 20); and
determining, by the at least one processor, the concentration level of the respective target gas based on the stain length of the visual change, optionally wherein the selected video frame has a sampling time that corresponds to a reading time, wherein the reading time corresponds to a desired exposure time of the at least one reagent material to the gas sample, optionally further comprising:
determining, by the at least one processor, a characteristic of the gas detection tube from the video image data; and
determining, by the at least one processor, the reading time based on the determined characteristic of the gas detection tube.

14. The method of claim 11, further comprising:
determining, by the at least one processor, a characteristic of the gas detection tube (10, 20);
determining, by the at least one processor, a graduated scale (13) based on the determined characteristic of the gas detection tube (10, 20); and
comparing, by the at least one processor, the stain length to the determined graduated scale (13) to determine the concentration level of the target gas, optionally wherein:
determining the characteristic of the gas detection tube includes determining at least one of a type of the gas detection tube or a manufacturing batch of interior materials of the gas detection tube, and the method further comprising:
determining, by the at least one processor, the graduated scale based on at least one of the type of the gas detection tube or the manufacturing batch of the interior materials, optionally further comprising:
determining, by the at least one processor, a reading time based on the determined characteristic of the gas detection tube; and
analyzing, by the at least one processor, the image data sampled at the determined reading time for the visual change corresponding to the gas detection tube.

15. The method of claim 11, wherein:
the gas detection tube (10, 20) comprises a graduated scale (13) printed on a surface of the gas detection tube (10, 20), wherein the graduated scale (13) comprises a plurality of concentration markings,
the method further comprising:
reading, by the at least one processor, the graduated scale (13) from the image data;
comparing, by the at least one processor, the stain length to the graduated scale (13); and
determining, by the at least one processor, the concentration level of the target gas based on a comparison of the stain length to the graduated scale (13).

## Patentansprüche

1. Gasprobenahmesystem (100), umfassend:
einen Behälter (30), der dazu ausgelegt ist, ein Gasdetektionsröhrchen (10, 20) zu empfangen, wobei das Gasdetektionsröhrchen (10, 20) einen Einlass zum Empfangen einer Gasprobe umfasst, wobei das Gasdetektionsröhrchen (10, 20) ferner (10, 20) einen inneren Hohlraum umfasst, in den die Gasprobe strömt, wobei der innere Hohlraum mindestens ein Reagenzmaterial enthält, das mit einem Zielgas reagiert, um eine visuelle Änderung mit einer Färbelänge zu bewirken, die einem Konzentrationsniveau des Zielgases entspricht;
eine Bildgebungsvorrichtung (60), die dazu ausgelegt ist, während einer Abtastperiode Bilddaten des Gasdetektionsröhrchens (10, 20) zu erzeugen;
mindestens einen Prozessor, der dazu ausgelegt ist, die Bilddaten von der Bildgebungsvorrichtung (60) zu empfangen, die Bilddaten auf die visuelle Änderung zu analysieren, die dem Gasdetektionsröhrchen (10, 20) entspricht, das Konzentrationsniveau des Zielgases basierend auf der Färbelänge der visuellen Änderung zu bestimmen; und auf eine Lesezeit zu überwachen und die Bildgebungsvorrichtung (60) zu steuern, um ein Probenbild zu der Lesezeit aufzunehmen;
wobei die Lesezeit einer gewünschten Expositionszeit des mindestens einen Reagenzmaterials gegenüber der Gasprobe entspricht und die analysierten Bilddaten dem Probenbild entsprechen.

2. Gasprobenahmesystem (100) nach Anspruch 1, wobei der mindestens eine Prozessor dazu ausgelegt ist, basierend auf einem Zeitgeber, der zu Beginn der Abtastperiode initialisiert wird, die Lesezeit zu überwachen.

3. Gasprobenahmesystem (100) nach Anspruch 1, wobei:
der mindestens eine Prozessor dazu ausgelegt ist, die Bildgebungsvorrichtung (60) zu steuern, um ein Anfangsbild zu Beginn der Abtastperiode aufzunehmen,
die Bildgebungsvorrichtung (60) dazu ausgelegt ist, das Anfangsbild aufzunehmen, um Anfangsbilddaten zu erzeugen, und
der mindestens eine Prozessor ferner zu Folgendem ausgelegt ist:
Bestimmen einer Charakteristik des Gasdetektionsröhrchens (10, 20) aus den Anfangsbilddaten; und
Bestimmen der Lesezeit basierend auf der bestimmten Charakteristik des Gasdetektionsröhrchens (10, 20).

4. Gasprobenahmesystem (100) nach Anspruch 1, wobei:
die Bildgebungsvorrichtung (60) dazu ausgelegt ist, eine Mehrzahl von Bildern des Gasdetektionsröhrchen (10, 20) zu unterschiedlichen Abtastzeiten während der Abtastperiode aufzunehmen und eine Mehrzahl von Bilddaten zu erzeugen, wobei jede Instanz von Bilddaten einem der Mehrzahl von Bildern entspricht,
der mindestens eine Prozessor dazu ausgelegt ist, eine Instanz von Bilddaten, die eine Abtastzeit aufweisen, die einer Lesezeit entspricht, aus der Mehrzahl von Bilddaten auszuwählen, wobei die Lesezeit einer gewünschten Expositionszeit des mindestens einen Reagenzmaterials gegenüber der Gasprobe entspricht, und
der mindestens eine Prozessor ferner dazu ausgelegt ist, die ausgewählte Instanz von Bilddaten auf die visuelle Änderung zu analysieren, die dem Gasdetektionsröhrchen (10, 20) entspricht, und das Konzentrationsniveau des jeweiligen Zielgases basierend auf der Färbelänge der visuellen Änderung zu bestimmen, wobei optional:
der mindestens eine Prozessor ferner zu Folgendem ausgelegt ist:
Bestimmen einer Charakteristik des Gasdetektionsröhrchens aus der Mehrzahl von Bilddaten; und
Bestimmen der Lesezeit basierend auf der bestimmten Charakteristik des Gasdetektionsröhrchens.

5. Gasprobenahmesystem (100) nach Anspruch 1, wobei:
die Bildgebungsvorrichtung (60) dazu ausgelegt ist, ein Video des Gasdetektionsröhrchens (10, 20) während der Abtastperiode aufzunehmen und Videobilddaten zu erzeugen, die einer Mehrzahl von Videobildern des Videos entsprechen,
der mindestens eine Prozessor dazu ausgelegt ist, die Videobilddaten zu empfangen, ein Videobild aus der Mehrzahl von Videobildern auszuwählen, die Videobilddaten, die dem ausgewählten Videobild entsprechen, auf die visuelle Änderung zu analysieren, die dem Gasdetektionsröhrchen (10, 20) entspricht, und das Konzentrationsniveau des jeweiligen Zielgases basierend auf der Färbelänge der visuellen Änderung zu bestimmen, wobei optional das ausgewählte Videobild eine Abtastzeit aufweist, die einer Lesezeit entspricht, wobei die Lesezeit einer gewünschten Expositionszeit des mindestens einen Reagenzmaterials gegenüber der Gasprobe entspricht, und wobei ferner optional:
der mindestens eine Prozessor ferner dazu ausgelegt ist, eine Charakteristik des Gasdetektionsröhrchens aus der Mehrzahl von Bilddaten zu bestimmen und die Lesezeit basierend auf der bestimmten Charakteristik des Gasdetektionsröhrchens zu bestimmen.

6. Gasprobenahmesystem (100) nach Anspruch 1, wobei:
der mindestens eine Prozessor ferner dazu ausgelegt ist,
das Gasdetektionsröhrchen (10, 20) zu identifizieren, eine abgestufte Skala (13) basierend auf dem identifizierten Gasdetektionsröhrchen (10, 20) zu bestimmen und die Färbelänge mit der bestimmten abgestuften Skala (13) zu vergleichen, um das Konzentrationsniveau des Zielgases zu bestimmen, und wobei optional:
das Identifizieren des Gasdetektionsröhrchens (10, 20) Bestimmen mindestens eines von einem Typ des Gasdetektionsröhrchens (10, 20) oder einer Herstellungscharge von Innenmaterialien des Gasdetektionsröhrchens (10, 20) umfasst und der mindestens eine Prozessor dazu ausgelegt ist, die abgestufte Skala basierend auf mindestens einem von dem Typ des Gasdetektionsröhrchens (10, 20) oder der Herstellungscharge der Innenmaterialien zu bestimmen, und wobei ferner optional
der mindestens eine Prozessor ferner dazu ausgelegt ist, eine Lesezeit basierend auf dem identifizierten Gasdetektionsröhrchen (10, 20) zu bestimmen und die zu der bestimmten Lesezeit abgetasteten Bilddaten auf die visuelle Änderung zu analysieren, die dem Gasdetektionsröhrchen (10, 20) entspricht.

7. Gasprobenahmesystem (100) nach Anspruch 1, wobei:
das Gasdetektionsröhrchen (10, 20) eine abgestufte Skala (13) umfasst, die auf eine Oberfläche des Gasdetektionsröhrchens (10, 20) gedruckt ist, wobei die abgestufte Skala (13) eine Mehrzahl von Konzentrationsmarkierungen umfasst,
wobei der mindestens eine Prozessor dazu ausgelegt ist, die abgestufte Skala (13) aus den Bilddaten zu lesen, die Färbelänge mit der abgestuften Skala (13) zu vergleichen und das Konzentrationsniveau des Zielgases basierend auf einem Vergleich der Färbelänge mit der abgestuften Skala (13) zu bestimmen.

8. Gasprobenahmesystem (100) nach Anspruch 1, wobei: der mindestens eine Prozessor ferner zu Folgendem ausgelegt ist:
(i) Identifizieren des Gasdetektionsröhrchens (10, 20), umfassend Bestimmen einer Charakteristik des Gasdetektionsröhrchens (10, 20), Bestimmen einer Charakteristik der visuellen Änderung basierend auf der bestimmten Charakteristik des Gasdetektionsröhrchens (10, 20) und Analysieren der Bilddaten auf die bestimmte Charakteristik der visuellen Änderung; und/oder
(ii) Speichern des bestimmten Konzentrationsniveaus des Zielgases für das identifizierte Gasdetektionsröhrchen (10, 20) und Auslösen eines Alarms, wenn das bestimmte Konzentrationsniveau eine vorbestimmte Konzentrationsschwelle überschreitet.

9. Gasprobenahmesystem (100) nach Anspruch 1, wobei:
das Gasdetektionsröhrchen (10, 20) eine abgestufte Skala (13) umfasst, die auf eine Oberfläche davon gedruckt ist, wobei die abgestufte Skala (13) eine Mehrzahl von Konzentrationsmarkierungen umfasst,
wobei der mindestens eine Prozessor dazu ausgelegt ist, die abgestufte Skala (13) aus den Bilddaten für das identifizierte Gasdetektionsröhrchen (10, 20) zu lesen, die Färbelänge mit der abgestuften Skala (13) zu vergleichen und das Konzentrationsniveau des Zielgases basierend auf einem Vergleich der Färbelänge mit der abgestuften Skala (13) zu bestimmen.

10. Gasprobenahmesystem nach einem der vorhergehenden Ansprüche,
wobei der Behälter einer von einer Mehrzahl von Behältern ist, wobei jeder der Mehrzahl von Behältern dazu ausgelegt ist, mindestens ein Gasdetektionsröhrchen zu empfangen, wobei jedes jeweilige Gasdetektionsröhrchen einen Einlass zum Empfangen einer jeweiligen Gasprobe umfasst und wobei jedes jeweilige Gasdetektionsröhrchen ferner einen inneren Hohlraum umfasst, in den die jeweilige Gasprobe strömt, wobei der innere Hohlraum mindestens ein Reagenzmaterial enthält, das mit einem jeweiligen Zielgas reagiert, um eine jeweilige visuelle Änderung mit einer Färbelänge zu bewirken, die einem Konzentrationsniveau des jeweiligen Zielgases entspricht.

11. Verfahren zur Gasprobenahme, umfassend:
Bereitstellen mindestens eines Reagenzmaterials in einem inneren Hohlraum eines Gasdetektionsröhrchens (10, 20), wobei das Gasdetektionsröhrchen (10, 20) einen Einlass zum Empfangen einer Gasprobe und einen Auslass umfasst, wobei der innere Hohlraum dazwischen angeordnet ist;
Exponieren des mindestens einen Reagenzmaterials, das mit einem Zielgas reagiert, gegenüber der Gasprobe, um eine visuelle Änderung mit einer Färbelänge zu bewirken, die einem Konzentrationsniveau des Zielgases entspricht;
Erzeugen von Bilddaten der Gasdetektionsröhrchen (10, 20) durch eine Bildgebungsvorrichtung (60) während einer Abtastperiode;
Analysieren der Bilddaten durch mindestens einen Prozessor auf die visuelle Änderung, die dem Gasdetektionsröhrchen (10, 20) entspricht;
Bestimmen des Konzentrationsniveaus des Zielgases durch mindestens einen Prozessor basierend auf der Färbelänge der visuellen Änderung; und
Überwachen auf eine Lesezeit und Steuern der Bildgebungsvorrichtung (60) durch mindestens einen Prozessor, um ein Probenbild zu der Lesezeit aufzunehmen, wobei die Lesezeit einer gewünschten Expositionszeit des mindestens einen Reagenzmaterials gegenüber der Gasprobe entspricht und die analysierten Bilddaten dem Probenbild entsprechen.

12. Verfahren nach Anspruch 11, ferner umfassend:
Aufnehmen einer Mehrzahl von Bildern der Gasdetektionsröhrchen (10, 20) durch die Bildgebungsvorrichtung (60) zu unterschiedlichen Abtastzeiten während der Abtastperiode, um eine Mehrzahl von Bilddaten-Instanzen zu erzeugen, wobei jede Instanz von Bilddaten einem der Mehrzahl von Bildern und einer der unterschiedlichen Abtastzeiten entspricht;
Auswählen einer Instanz von Bilddaten mit einer Abtastzeit, die einer Lesezeit entspricht, durch den mindestens einen Prozessor aus der Mehrzahl von Bilddaten-Instanzen, wobei die Lesezeit einer gewünschten Expositionszeit des mindestens einen Reagenzmaterials gegenüber der Gasprobe entspricht; und
Analysieren der ausgewählten Bilddateninstanz durch den mindestens einen Prozessor auf die visuelle Änderung, die dem Gasdetektionsröhrchen (10, 20) entspricht, und
Bestimmen des Konzentrationsniveaus des jeweiligen Zielgases durch den mindestens einen Prozessor basierend auf der Färbelänge der visuellen Änderung, optional ferner umfassend:
Bestimmen einer Charakteristik des Gasdetektionsröhrchens durch den mindestens einen Prozessor aus der Mehrzahl von Instanzen von Bilddaten; und
Bestimmen der Lesezeit durch den mindestens einen Prozessor basierend auf der bestimmten Charakteristik des Gasdetektionsröhrchens.

13. Verfahren nach Anspruch 11, ferner umfassend:
Aufnehmen eines Videos des Gasdetektionsröhrchens (10, 20) durch die Bildgebungsvorrichtung (60) während der Abtastperiode, um Videobilddaten zu erzeugen, die einer Mehrzahl von Videobildern des Videos entsprechen,
Auswählen eines Videobildes aus der Vielzahl von Videobildern durch den mindestens einen Prozessor;
Analysieren der Videobilddaten, die dem ausgewählten Videobild entsprechen, durch den mindestens einen Prozessor auf die visuelle Änderung, die dem Gasdetektionsröhrchen (10, 20) entspricht; und
Bestimmen des Konzentrationsniveaus des jeweiligen Zielgases durch den mindestens einen Prozessor basierend auf der Färbungslänge der visuellen Änderung, wobei optional das ausgewählte Videobild eine Abtastzeit aufweist, die einer Lesezeit entspricht, wobei die Lesezeit einer gewünschten Expositionszeit des mindestens einen Reagenzmaterials gegenüber der Gasprobe entspricht, optional ferner umfassend:
Bestimmen einer Charakteristik des Gasdetektionsröhrchens durch den mindestens einen Prozessor aus den Videobilddaten; und
Bestimmen der Lesezeit durch den mindestens einen Prozessor basierend auf der bestimmten Charakteristik des Gasdetektionsröhrchens.

14. Verfahren nach Anspruch 11, ferner umfassend:
Bestimmen einer Charakteristik des Gasdetektionsröhrchens (10, 20) durch den mindestens einen Prozessor;
Bestimmen einer abgestuften Skala (13) durch den mindestens einen Prozessor basierend auf der bestimmten Charakteristik des Gasdetektionsröhrchens (10, 20); und
Vergleichen der Färbelänge mit der bestimmten abgestuften Skala (13) durch den mindestens einen Prozessor, um das Konzentrationsniveau des Zielgases zu bestimmen, wobei optional:
das Bestimmen der Charakteristik des Gasdetektionsröhrchens Bestimmen eines von einem Typ des Gasdetektionsröhrchens oder einer Herstellungscharge von Innenmaterialien des Gasdetektionsröhrchens aufweist und das Verfahren ferner Folgendes umfasst:
Bestimmen der abgestuften Skala durch den mindestens einen Prozessor basierend auf mindestens einem von dem Typ des Gasdetektionsröhrchens oder der Herstellungscharge der Innenmaterialien, optional ferner umfassend:
Bestimmen einer Lesezeit durch den mindestens einen Prozessor basierend auf der bestimmten Charakteristik des Gasdetektionsröhrchens; und
Analysieren der zu der bestimmten Lesezeit abgetasteten Bilddaten durch den mindestens einen Prozessor auf die visuelle Änderung, die dem Gasdetektionsröhrchen entspricht.

15. Verfahren nach Anspruch 11, wobei:
das Gasdetektionsröhrchen (10, 20) eine abgestufte Skala (13) umfasst, die auf eine Oberfläche des Gasdetektionsröhrchens (10, 20) gedruckt ist, wobei die abgestufte Skala (13) eine Mehrzahl von Konzentrationsmarkierungen umfasst,
wobei das Verfahren ferner Folgendes umfasst:
Lesen der abgestuften Skala (13) aus den Bilddaten durch den mindestens einen Prozessor;
Vergleichen der Färbelänge mit der abgestuften Skala (13) durch den mindestens einen Prozessor; und
Bestimmen des Konzentrationsniveaus des Zielgases durch den mindestens einen Prozessor basierend auf einem Vergleich der Färbelänge mit der abgestuften Skala (13).

## Revendications

1. Système d'échantillonnage de gaz (100), comprenant :
un contenant (30) conçu pour recevoir un tube de détection de gaz (10, 20), le tube de détection de gaz (10, 20) comprenant un orifice d'admission pour recevoir un échantillon de gaz, le tube de détection de gaz (10, 20) comprenant en outre (10, 20) une cavité intérieure dans laquelle s'écoule l'échantillon de gaz, la cavité intérieure contenant au moins un matériau réactif qui réagit avec un gaz cible pour provoquer un changement visuel avec une longueur de colorant correspondant à un niveau de concentration du gaz cible ; un dispositif d'imagerie (60) configuré pour générer des données d'image du tube de détection de gaz (10, 20) pendant une période d'échantillonnage ;
au moins un processeur configuré pour recevoir les données d'image provenant du dispositif d'imagerie (60), analyser les données d'image pour détecter le changement visuel correspondant au tube de détection de gaz (10, 20), déterminer le niveau de concentration du gaz cible sur la base de la longueur du colorant du changement visuel ; et surveiller un temps de lecture et commander le dispositif d'imagerie (60) pour capturer une image d'échantillon au temps de lecture ;
dans lequel le temps de lecture correspond à un temps d'exposition souhaité de l'au moins un matériau réactif à l'échantillon de gaz, et les données d'image analysées correspondent à l'image d'échantillon.

2. Système d'échantillonnage de gaz (100) selon la revendication 1, dans lequel l'au moins un processeur est configuré pour surveiller le temps de lecture sur la base d'une minuterie initialisée au début de la période d'échantillonnage.

3. Système d'échantillonnage de gaz (100) selon la revendication 1, dans lequel :
l'au moins un processeur est configuré pour commander le dispositif d'imagerie (60) afin de capturer une image initiale au début de la période d'échantillonnage,
le dispositif d'imagerie (60) est configuré pour capturer l'image initiale afin de générer des données d'image initiale, et
l'au moins un processeur est en outre configuré pour :
déterminer une caractéristique du tube de détection de gaz (10, 20) à partir des données d'image initiale ; et
déterminer le temps de lecture sur la base de la caractéristique déterminée du tube de détection de gaz (10, 20).

4. Système d'échantillonnage de gaz (100) selon la revendication 1, dans lequel :
le dispositif d'imagerie (60) est configuré pour capturer une pluralité d'images du tube de détection de gaz (10, 20) à différents moments d'échantillonnage pendant la période d'échantillonnage et générer une pluralité de données d'image, chaque instance de données d'image correspondant à une image de la pluralité d'images,
l'au moins un processeur est configuré pour sélectionner une instance de données d'image ayant un temps d'échantillonnage qui correspond à un temps de lecture à partir de la pluralité de données d'image, dans lequel le temps de lecture correspond à un temps d'exposition souhaité de l'au moins un matériau réactif à l'échantillon de gaz, et
l'au moins un processeur est en outre configuré pour analyser l'instance sélectionnée de données d'image pour le changement visuel correspondant au tube de détection de gaz (10, 20), et déterminer le niveau de concentration du gaz cible respectif sur la base de la longueur de colorant du changement visuel, éventuellement dans lequel :
l'au moins un processeur est en outre configuré pour :
déterminer une caractéristique du tube de détection de gaz à partir de la pluralité de données d'image ; et
déterminer le temps de lecture sur la base de la caractéristique déterminée du tube de détection de gaz.

5. Système d'échantillonnage de gaz (100) selon la revendication 1, dans lequel :
le dispositif d'imagerie (60) est configuré pour capturer une vidéo du tube de détection de gaz (10, 20) pendant la période d'échantillonnage et générer des données d'image vidéo correspondant à une pluralité de trames vidéo de la vidéo,
l'au moins un processeur est configuré pour recevoir les données d'image vidéo, sélectionner une trame vidéo de la pluralité de trames vidéo, analyser les données d'image vidéo correspondant à la trame vidéo sélectionnée pour le changement visuel correspondant au tube de détection de gaz (10, 20), et déterminer le niveau de concentration du gaz cible respectif sur la base de la longueur de colorant du changement visuel, dans lequel, éventuellement dans lequel la trame vidéo sélectionnée a un temps d'échantillonnage qui correspond à un temps de lecture, dans lequel le temps de lecture correspond à un temps d'exposition souhaité de l'au moins un matériau réactif à l'échantillon de gaz, et en outre éventuellement dans lequel :
l'au moins un processeur est en outre configuré pour déterminer une caractéristique du tube de détection de gaz à partir de la pluralité de données d'image, et déterminer le temps de lecture sur la base de la caractéristique déterminée du tube de détection de gaz.

6. Système d'échantillonnage de gaz (100) selon la revendication 1, dans lequel :
l'au moins un processeur est en outre configuré pour identifier le tube de détection de gaz (10, 20), déterminer une échelle graduée (13) sur la base du tube de détection de gaz (10, 20) identifié, et comparer la longueur de colorant à l'échelle graduée (13) déterminée afin de déterminer le niveau de concentration du gaz cible, et éventuellement dans lequel :
l'identification du tube de détection de gaz (10, 20) comporte la détermination d'au moins un élément parmi un type du tube de détection de gaz (10, 20) et un lot de fabrication de matériaux intérieurs du tube de détection de gaz (10, 20), et l'au moins un processeur est configuré pour déterminer l'échelle graduée sur la base d'au moins un élément parmi le type du tube de détection de gaz (10, 20) et le lot de fabrication des matériaux intérieurs, et en outre éventuellement dans lequel
l'au moins un processeur est en outre configuré pour déterminer un temps de lecture sur la base du tube de détection de gaz (10, 20) identifié, et analyser les données d'image échantillonnées au temps de lecture déterminé concernant le changement visuel correspondant au tube de détection de gaz (10, 20).

7. Système d'échantillonnage de gaz (100) selon la revendication 1, dans lequel :
le tube de détection de gaz (10, 20) comprend une échelle graduée (13) imprimée sur une surface du tube de détection de gaz (10, 20), dans lequel l'échelle graduée (13) comprend une pluralité de marques de concentration,
dans lequel l'au moins un processeur est configuré pour lire l'échelle graduée (13) à partir des données d'image, comparer la longueur de colorant à l'échelle graduée (13), et déterminer le niveau de concentration du gaz cible sur la base d'une comparaison de la longueur de colorant à l'échelle graduée (13).

8. Système d'échantillonnage de gaz (100) selon la revendication 1, dans lequel :
l'au moins un processeur est en outre configuré pour :
(i) identifier le tube de détection de gaz (10, 20), y compris déterminer une caractéristique du tube de détection de gaz (10, 20), déterminer une caractéristique du changement visuel sur la base de la caractéristique déterminée du tube de détection de gaz (10, 20), et analyser les données d'image pour la caractéristique déterminée du changement visuel ; et/ou
(ii) stocker le niveau de concentration déterminé du gaz cible pour le tube de détection de gaz (10, 20) identifié et déclencher une alarme si le niveau de concentration déterminé dépasse un seuil de concentration prédéterminé.

9. Système d'échantillonnage de gaz (100) selon la revendication 1, dans lequel :
le tube de détection de gaz (10, 20) comprend une échelle graduée (13) imprimée sur une surface de celui-ci, dans lequel l'échelle graduée (13) comprend une pluralité de marques de concentration,
dans lequel, l'au moins un processeur est configuré pour lire l'échelle graduée (13) à partir des données d'image pour le tube de détection de gaz (10, 20) identifié, comparer la longueur de colorant à l'échelle graduée (13), et déterminer le niveau de concentration du gaz cible sur la base d'une comparaison de la longueur de colorant à l'échelle graduée (13).

10. Système d'échantillonnage de gaz selon une quelconque revendication précédente,
dans lequel le contenant est un contenant d'une pluralité de contenants, chaque contenant de la pluralité de contenants étant conçu pour recevoir au moins un tube de détection de gaz, chaque tube de détection de gaz respectif comprenant un orifice d'admission pour recevoir un échantillon de gaz respectif, et chaque tube de détection de gaz respectif comprenant en outre une cavité intérieure dans laquelle s'écoule l'échantillon de gaz respectif, la cavité intérieure contenant au moins un matériau réactif qui réagit avec un gaz cible respectif pour provoquer un changement visuel respectif avec une longueur de colorant correspondant à un niveau de concentration du gaz cible respectif.

11. Procédé d'échantillonnage de gaz, comprenant :
la fourniture d'au moins un matériau réactif dans une cavité intérieure d'un tube de détection de gaz (10, 20), le tube de détection de gaz (10, 20) comprenant un orifice d'admission pour recevoir un échantillon de gaz et un orifice de sortie avec la cavité intérieure agencée entre ceux-ci ;
l'exposition de l'au moins un matériau réactif qui réagit avec un gaz cible à l'échantillon de gaz pour provoquer un changement visuel avec une longueur de colorant correspondant à un niveau de concentration du gaz cible ; la génération, par un dispositif d'imagerie (60), de données d'image du tube de détection de gaz (10, 20) pendant une période d'échantillonnage ;
l'analyse, par au moins un processeur, des données d'image pour le changement visuel correspondant au tube de détection de gaz (10, 20) ;
la détermination, par au moins un processeur, du niveau de concentration du gaz cible sur la base de la longueur de colorant du changement visuel ; et
la surveillance, par au moins un processeur, d'un temps de lecture et la commande du dispositif d'imagerie (60) pour capturer une image d'échantillon au temps de lecture, dans lequel le temps de lecture correspond à un temps d'exposition souhaité de l'au moins un matériau réactif à l'échantillon de gaz, et les données d'image analysées correspondent à l'image d'échantillon.

12. Procédé selon la revendication 11, comprenant en outre :
la capture, par le dispositif d'imagerie (60), d'une pluralité d'images du tube de détection de gaz (10, 20) à différents moments d'échantillonnage pendant la période d'échantillonnage afin de générer une pluralité d'instances de données d'image, chaque instance de données d'image correspondant à une image de la pluralité d'images et à l'un des différents moments d'échantillonnage ;
la sélection, par l'au moins un processeur, d'une instance de données d'image ayant un temps d'échantillonnage qui correspond à un temps de lecture à partir de la pluralité d'instances de données d'image, dans lequel le temps de lecture correspond à un temps d'exposition souhaité de l'au moins un matériau réactif à l'échantillon de gaz ; et
l'analyse, par l'au moins un processeur, de l'instance de données d'image sélectionnée pour le changement visuel correspondant au tube de détection de gaz (10, 20) et la détermination, par l'au moins un processeur, du niveau de concentration du gaz cible respectif sur la base de la longueur de colorant du changement visuel, éventuellement comprenant en outre :
la détermination, par l'au moins un processeur, d'une caractéristique du tube de détection de gaz à partir de la pluralité d'instances de données d'image ; et
la détermination, par l'au moins un processeur, du temps de lecture sur la base de la caractéristique déterminée du tube de détection de gaz.

13. Procédé selon la revendication 11, comprenant en outre :
la capture, par le dispositif d'imagerie (60), d'une vidéo du tube de détection de gaz (10, 20) pendant la période d'échantillonnage afin de générer des données d'image vidéo correspondant à une pluralité de trames vidéo de la vidéo,
la sélection, par l'au moins un processeur, d'une trame vidéo de la pluralité de trames vidéo ;
l'analyse, par l'au moins un processeur, des données d'image vidéo correspondant à la trame vidéo sélectionnée pour le changement visuel correspondant au tube de détection de gaz (10, 20) ; et
la détermination, par l'au moins un processeur, du niveau de concentration du gaz cible respectif sur la base de la longueur de colorant du changement visuel, éventuellement dans lequel la trame vidéo sélectionnée a un temps d'échantillonnage qui correspond à un temps de lecture, dans lequel le temps de lecture correspond à un temps d'exposition souhaité de l'au moins un matériau réactif à l'échantillon de gaz, éventuellement comprenant en outre :
la détermination, par l'au moins un processeur, d'une caractéristique du tube de détection de gaz à partir des données d'image vidéo ; et
la détermination, par l'au moins un processeur, du temps de lecture sur la base de la caractéristique déterminée du tube de détection de gaz.

14. Procédé selon la revendication 11, comprenant en outre :
la détermination, par l'au moins un processeur, d'une caractéristique du tube de détection de gaz (10, 20) ;
la détermination, par l'au moins un processeur, d'une échelle graduée (13) sur la base de la caractéristique déterminée du tube de détection de gaz (10, 20) ; et
la comparaison, par l'au moins un processeur, de la longueur de colorant à l'échelle graduée (13) déterminée pour déterminer le niveau de concentration du gaz cible, éventuellement dans lequel :
la détermination de la caractéristique du tube de détection de gaz comprend la détermination d'au moins l'un d'un type du tube de détection de gaz et d'un lot de fabrication de matériaux intérieurs du tube de détection de gaz, et le procédé comprenant en outre :
la détermination, par l'au moins un processeur, de l'échelle graduée sur la base d'au moins l'un du type du tube de détection de gaz et du lot de fabrication des matériaux intérieurs, éventuellement comprenant en outre :
la détermination, par l'au moins un processeur, d'un temps de lecture sur la base de la caractéristique déterminée du tube de détection de gaz ; et
l'analyse, par l'au moins un processeur, des données d'image échantillonnées au temps de lecture déterminé pour le changement visuel correspondant au tube de détection de gaz.

15. Procédé selon la revendication 11, dans lequel :
le tube de détection de gaz (10, 20) comprend une échelle graduée (13) imprimée sur une surface du tube de détection de gaz (10, 20), dans lequel l'échelle graduée (13) comprend une pluralité de marques de concentration,
le procédé comprenant en outre :
la lecture, par l'au moins un processeur, de l'échelle graduée (13) à partir des données d'image ;
la comparaison, par l'au moins un processeur, de la longueur de colorant à l'échelle graduée (13) ; et
la détermination, par l'au moins un processeur, du niveau de concentration du gaz cible sur la base d'une comparaison de la longueur de colorant avec l'échelle graduée (13).
